(19) Europäisches Patentamt
European Patent Office
Office européen des brevets

(11) **EP 3 166 240 A1**

(12) **EUROPEAN PATENT APPLICATION**

(43) Date of publication:
**10.05.2017 Bulletin 2017/19**

(51) Int Cl.:
***H04J 3/06*** (2006.01)

(21) Application number: **15193156.5**

(22) Date of filing: **05.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ROBERT BOSCH GMBH**
**70442 Stuttgart (DE)**

(72) Inventor: **Diarra, Aboubacar**
**71706 Markgroeningen (DE)**

(54) **HANDLING OF CORRUPTED TIME SYNCHRONIZATION MESSAGES IN AN ETHERNET-BASED NETWORK**

(57)     In order to handle corrupted messages that are involved in a clock synchronization process of an Ethernet-based network, it is suggested to
- detect whether a message (22) involved in the time synchronization process is corrupted;
- send a repeat request message (23) to the sender (1) of the corrupted message (22);
- upon reception of the repeat request message (23), send a repeat response message (33); and
- upon reception of the repeat response message (33), utilize at least one information associated with the repeat response message (33) for the clock synchronization process.

**FIG. 6**

EP 3 166 240 A1

**Description**

Prior art

The invention relates to a method for handling time synchronization errors in an Ethernet based network.

Time synchronization is an important issue in Ethernet-based in-vehicle time and safety critical networks. Time and safety critical data are only allowed to be send, after a common time base is established. Therefore, the process of synchronizing the clocks of each node which is part of the network at start-up has to be fast.

A master clock node, also denoted as grand master (GM), propagates time information to establish a common time base in the whole network. Nodes called slave nodes use this time information to synchronize or correct there internal clocks. In-vehicle networks typically have a fixed topology which means that the grand master e.g. the master clock is statically configured.

However, in spite of its proven performances in terms of achievable synchronization accuracy, currently used in-vehicle network standards (e.g. IEEE 802.1 AS) do not provide any mechanism for handling a situation where some frames of a synchronization message are lost or corrupted. However, this is an important issue since if a synchronization message is corrupted during the transmission, at least some slave nodes do not have all the messages that are needed for synchronizing their internal clocks.

Disclosure of the invention

It is an object of the invention to provide a mechanism for handling situations where at least some part of the synchronization messages are lost or corrupted. The mechanism further aims at bringing the network in a synchronized status as soon as possible, whenever corrupted or lost synchronization frames are detected.

The object is solved by a method, a system and network nodes compromising the features of the independent claims. Further embodiments as well as special adaptations to some specific frames that might be used in an Ethernet-based synchronization process are defined by the features of the dependent claims.

Possible embodiments of the present invention are illustrated by way of example and not limitation in the figures of the accompanying drawings, in which like references indicate similar elements and in which:

Fig. 1     shows the synchronization mechanism used in an Ethernet-based network;

Fig. 2     shows a sequence of messages that are used in order to determine the link delay and are part of the peer delay mechanism;

Fig. 3     shows a sequence of messages between a master clock, a bridge and a slave in order to establish a time distribution mechanism;

Fig. 4     shows a sequence of synchronization messages used in a one-step synchronization mechanism;

Fig. 5     shows a request mechanism for dealing with corrupted synchronization follow-up messages;

Fig. 6     shows a request mechanism for dealing with corrupted synchronization messages in a one-step synchronization process;

Fig. 7     shows a request mechanism for dealing with corrupted peer-delay response messages;

Fig. 8     shows a request mechanism for dealing with corrupted peer-delay response follow up messages; and

Fig. 9     shows a request mechanism for dealing with corrupted peer-delay request messages.

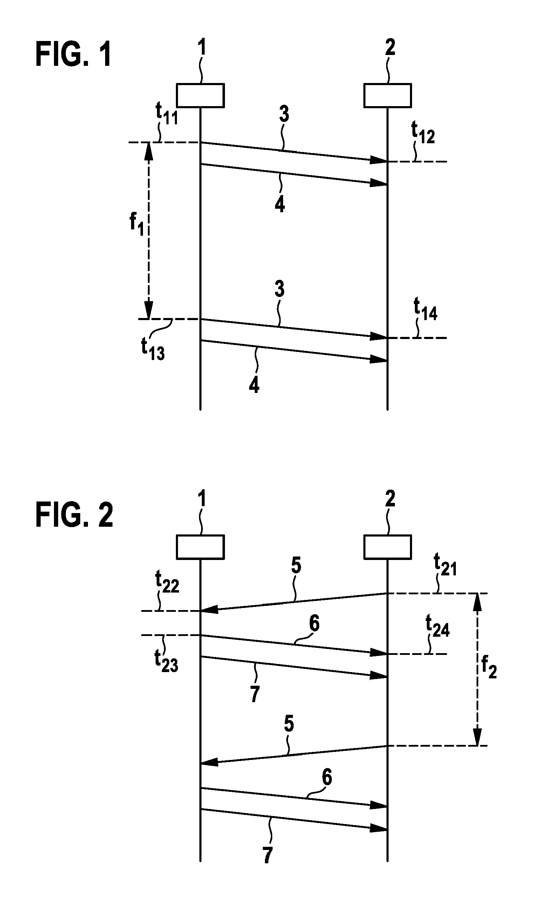

Fig. 1 shows the basic synchronization mechanism that is typically used in Ethernet-based in-vehicle network systems. Fig.1 shows the messages that are transmitted from a master node 1, e.g. master clock or grand master, to a slave node 2 via the network. At time $t_{11}$ the master node 1 sends a synchronization message 3 to slave node 2 which receives the synchronization messages 3 at time $t_{12}$. Master node 1 has stored the time of transmission $t_{11}$ and sends this time data within a so called *follow up message* 4 to slave node 2. Thus, slave node 2 now has the time $t_{11}$ of sending the synchronization message 3 and the reception time $t_{12}$ for further processing. Master node 1 again sends a synchronization message 3 to slave node 2 with a frequency $f_1$.

The known time synchronization method also takes the so called *link delay* into account. Link delay is the propagation time of a message or a frame over the network from one node to another. Link delay is used by slave nodes for correcting there internal time. The link delay is determined via the so called peer delay mechanism.

As shown in Fig 2, a slave node 2 sends a peer delay request message 5 to master node 1. The peer delay request 5 is sent at time $t_{21}$ and received at time $t_{22}$. Upon reception of the peer delay request 5, master node 1 sends a peer delay response message 6 at time $t_{23}$, which will be received at slave node 2 at time $t_{24}$. The peer delay response 6 is followed by another message, the peer delay response follow up 7, which is used to transmit the time information $t_{23}$ to slave node 2. At a given frequency $f_2$, for example each second, slave node 2 sends another peer delay request 5 to master node 1.

After the reception of the peer delay response message 6 and the peer delay response follow up message 7 slave node 2 calculates the link delay based on the following equation:

$$PathDelay = [(t_{24}\text{-}t_{21}) \cdot neighborRateRatio - (t_{23}\text{-}t_{22})] / 2$$

The *neighborRateRatio* is computed to compensate the drift between master and slave clocks. It is calculated by a slave node based on the transmission and reception times of two messages of the same size. For example, two consecutive synchronization messages 3 or two consecutive peer delay response messages 6 can be used. Advantageously, the *neighborRateRatio* is computed based on two consecutive synchronization messages 3, because these messages are transmitted more frequently and the synchronization can thus be done faster on network start-up.

Referring to Fig. 1, the neighborRateRatio can be computed as follows:

$$NeighborRateRatio = (t_{11}\text{-}t_{13}) / (t_{12}\text{-}t_{14})$$

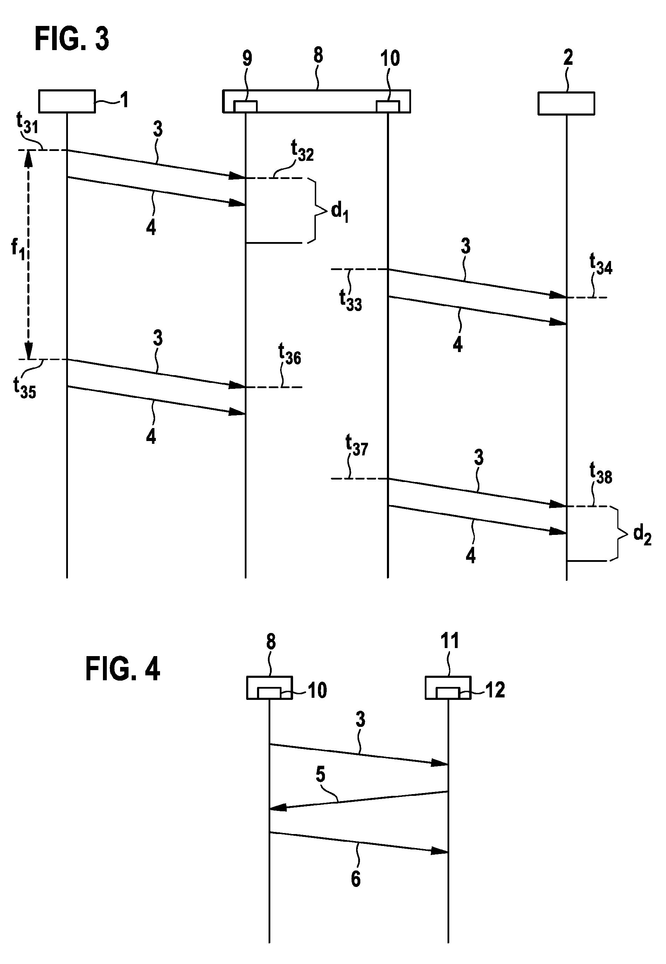

Fig. 3 shows the time distribution mechanism in more detail, based on the messages shown in Fig.1 and 2. At time $t_{31}$, master node 1, e.g. the master clock, transmits a synchronization message 3 to a bridge 8, in particular to a slave port 9 of bridge 8. Time $t_{31}$ is stored at master node 1 and transmitted via the synchronization follow-up message 4 to bridge 8. The synchronization follow-up message 4 comprises for instance an information denoted as:

*Precise origin time stamp:* This field contains the transmission time $t_{31}$ of the synchronization message 3 according to the internal clock of master node 1.

Usually, the synchronization follow-up message 4 comprises at least two further fields, the so-called *correction field* and the so-called *RateRatio.* Both fields are set to 0 in synchronization follow-up messages 4 that are transmitted from the master clock node.

Upon reception of the synchronization message 3, bridge 8 safes the corresponding reception time $t_{32}$. Having received the synchronization follow-up message 4, bridge 8 now can correct its internal clock using the following equation:

$$current\_time\_bridge = t_{31} + pathDelay_{Master\_to\_Bridge} + d_1 \cdot$$

$$neighborRateRatio_{Master\_to\_Bridge}$$

Bridge 8 then generates and forwards a synchronization message 3 at time $t_{33}$ to slave node 2 which receives this synchronization message 3 at time $t_{34}$. After that, bridge 8 sends a synchronization follow-up message 4 to slave node 2. Within this synchronization follow-up message 4, the precise origin time stamp is transmitted to slave node 2, and also the neighborRateRatio$_{Master\_to\_Bridge}$ and a *correction field* which is computed based on the following equation:

$$CorrectionField_{Bridge} = pathDelay_{Master\_to\_Bridge} + (t_{33} - t_{32}) \cdot$$

$$neighborRateRatio_{Master\_to\_Bridge}$$

After reception of this synchronization follow-up message 4 received from bridge 8, slave node 2 will be able to correct its internal clock using the following equation:

$$Current\_time\_slave = t_{31} + correctionField_{Bridge} + pathDelay_{Bridge\_to\_Slave} + d_2 \cdot$$

$$neighborRateRatio_{Master\_to\_Bridge} \cdot neighborRateRatio_{Bridge\_to\_Slave}$$

Figures 1 to 3 show the synchronization process in a so-called two-step-mode. However, some Ethernet-based networks are configured to synchronize the clocks using a so-called one-step-mode which means that there are no follow-up messages.

Figure 4 shows an example of a synchronization process in one-step-mode. In this example, bridge 8 transmits a synchronization message 3 from master port 10 to slave port 12 of another bridge 11. This synchronization message 3 now comprises also the transmission time at which this message is sent to bridge 11.

If bridge 11 sends a peer delay request 5 to bridge 8, bridge 8 sends a peer delay response message that contains the relevant time information, such that no follow-up messages have to be transmitted.

In spite of its proven performances in terms of achievable synchronization accuracy, the synchronization mechanism described above does not have any feature for dealing with lost or corrupted frames or messages. However, when a synchronization message is corrupted during the transmission, some slave nodes do not have all the information that is needed for correcting their internal clocks. For example, if a synchronization follow-up message 4 is corrupted, the receiving slave node will drop this corrupted message. As a consequence, the receiving slave node does not get the information at which time the synchronization message 3 was sent by the master node and therefore cannot forward any synchronization message to other devices. Since synchronization messages 3 are typically send each 125 ms, the bridge as well as the end devices have to wait until the next cycle. Then, they will receive another synchronization message and another follow-up message. However, during this waiting time, their synchronization errors are increasing and they do not have the possibility to correct them.

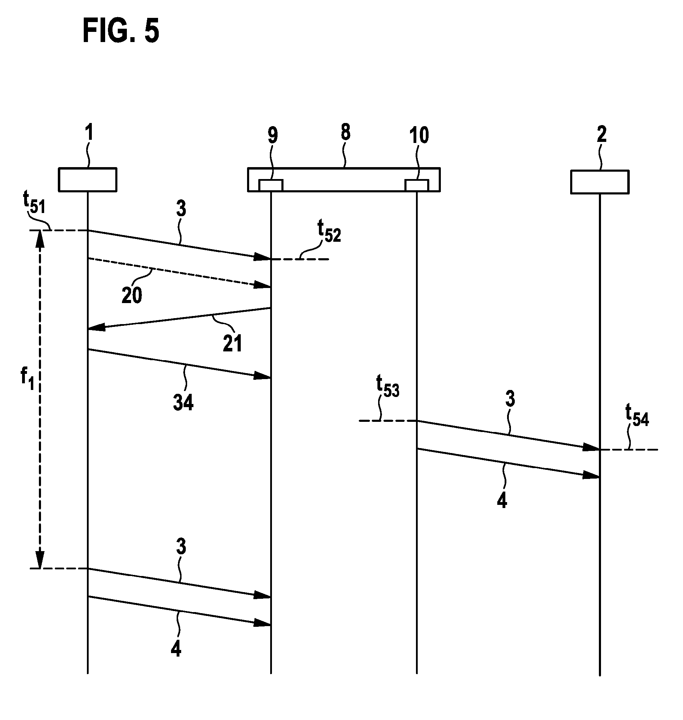

Figure 5 shows an example of handling a corrupted follow-up message. At time $t_{51}$, master node 1 transmits a synchronization message 3 to bridge 8, which receives this message at time $t_{52}$. Master 1 then transmits a follow-up message 20, which is corrupted. However, according to the present invention, bridge 8 does not wait until the next cycle. Having detected that follow-up message 20 is corrupted, it transmits a repeat request message, denoted as follow-up request message 21, to master node 1. Master node 1 then sends a repeat response message, which is another follow-up message 34, in return. This follow-up message 34 contains time $t_{51}$ which is the time at which synchronization message 3 was sent to bridge 8. Thus, bridge 8 is now enabled to correct its internal clock. Furthermore, bridge 8 is enabled to generate and transmit a synchronization message 3 at time $t_{53}$ to slave node 2 (or any neighboring device) that receives this message at time $t_{54}$. Slave node 2 is now also able to correct its internal clock and has not to wait until the next transmission cycle.

In one-step mode, devices or nodes that send synchronization messages, do not need to store the transmission time of this synchronization message. Instead, the time of sending this synchronization message is part of the message itself.

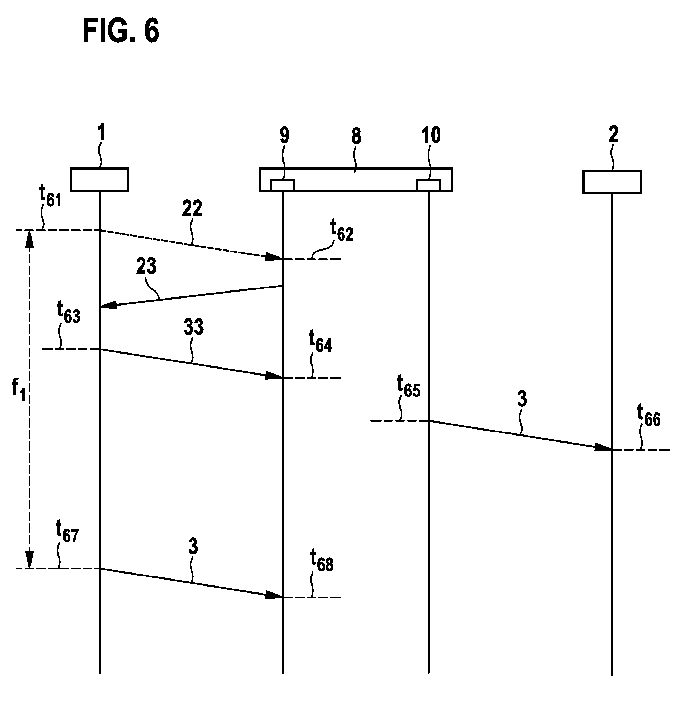

Figure 6 shows an example, where bridge 8 receives a corrupted synchronization message 22 from master node 1. Having detected that this message is corrupted, bridge 8 sends a repeat request message denoted as synchronization request message 23 to master node 1. Upon receiving synchronization request message 23, master node 1 sends a repeat response message, which in this case is a synchronization message 33, now in including the actual transmission time $t_{63}$ of this newly generated synchronization message 33. Upon reception of this newly generated synchronization message 33, bridge 8 adjusts the internal clock and transmits a synchronization message 3 at time $t_{65}$ to slave node 2 or another end device which receives this synchronization message 3 at time $t_{66}$.

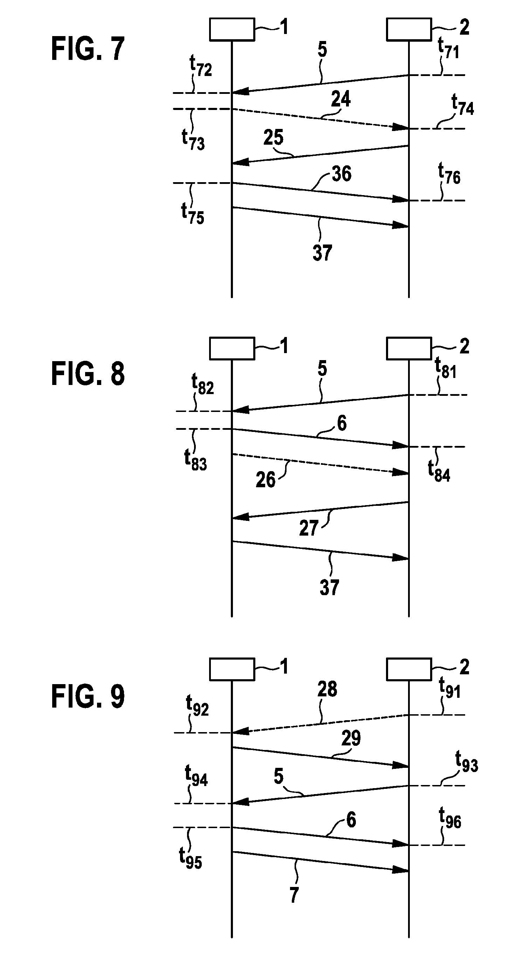

Figure 7 shows a situation, where slave node 2 transmits a peer delay request message 5. In response, master node 1 sends a peer delay response message 24 to slave node 2. However, the peer delay response message 24 arriving at slave node 2 is corrupted. According to the present invention, having detected that the peer delay response message 24 is corrupted, slave node 2 transmits a repeat request message denoted as peer delay response request 25 to master node 1. Upon reception of the peer delay response request 25, master node 1 sends a repeat response message which in this case is a peer delay response message 36. The retransmitted peer delay response message 36 contains the reception time $t_{72}$ of peer delay request 5.

If the synchronization mechanism is implemented based on a two-step mode, then master node 1 will also transmit a peer delay response follow-up message 37 to slave node 2. However, if the synchronization mechanism is in a one-step mode, then the retransmitted peer delay response message 36 contains the time difference between times $t_{75}$ and $t_{72}$.

Figure 8 shows a situation in which slave node 2 detects the reception of a corrupted peer delay response follow-up message 26. In this case, slave node 2 sends a repeat request message, denoted as peer delay response follow-up request 27 to master node 1 which intern transmits a repeat response message, which in this case is a peer delay response follow-up message 37, including time $t_{83}$, at which peer delay response message 6 was transmitted to slave node 2.

Figure 9 shows a mechanism that is used if master node 1 receives a corrupted peer delay request 28. In this case, master node 1 sends a repeat request message, denoted as peer delay request request 29 to slave node 2. Slave node 2 then sends a repeat response message, which is a peer delay request message 35. If the synchronization mechanism is in one-step mode, master node 1 transmits a peer delay response message 6, comprising the timing information ($t_{95}$ - $t_{92}$). However, if the synchronization process is in two-step-mode, the retransmitted peer delay response message 6 contains time information $t_{94}$ which is the time of reception of the peer delay request 5. Then, master node 1 transmits a peer delay response follow-up message 7, containing the time information $t_{95}$.

The present invention enables nodes within a network to correct their internal clocks even if some messages that are used within the synchronization process are corrupted. Thus, the problem of internal clocks drifting too far is solved.

The elements and mechanisms of the various embodiments described above can be combined to provide further embodiments. In general, in the following claims, the terms used should not be construed to limit the described request mechanisms to the specific embodiments disclosed in the specification and the claims, but should be construed to include all operations or processes that operate under the claims. In the forgoing description, numerous specific details are introduced to provide a thorough understanding of, and enabling description for, embodiments of the present invention. One skilled in the relevant art, however, will recognize these embodiments can be practiced without one or more of the specific details, or with other components, systems, etc. In other instances, well-known structures or operations are not shown, or are not described in detail, to avoid obscuring aspects of the disclosed embodiments.

**Claims**

1. Method for handling corrupted messages that are involved in a clock synchronization process in a Ethernet-based network, **characterized in that** the method comprises the steps of:

   - detecting that a message (20; 22; 24; 26; 28) involved in the time synchronization process is corrupted;
   - sending a repeat request message (21; 23; 25; 27; 29) to the sender (1; 2) of the corrupted message (20; 22; 24; 26; 28);
   - upon reception of the repeat request message (21; 23; 25; 27; 29), sending a repeat response message (33; 34; 35; 36; 37);
   - upon reception of the repeat response message (33; 34; 35; 36; 37), utilizing at least one information associated with the repeat response message (33; 34; 35; 36; 37) for the clock synchronization process.

2. Method of claim 1, wherein the corrupted message is a follow-up message (20) following a synchronization message (3) in a two-step synchronization process, the repeat response message (34) comprises the transmission time ($t_{51}$) of the synchronization message (3).

3. Method of claim 1 or 2, wherein the corrupted message is a synchronization message (22) in a one-step synchronization process, the repeat response message is a newly generated synchronization message (33).

4. Method of one of the preceding claims, wherein the corrupted message is a peer-delay response message (24) in a two-step synchronization process, the repeat response message (36) comprises the time ($t_{72}$) of the reception of the peer delay response request message (25).

5. Method of anyone of the preceding claims, wherein the corrupted message is a peer-delay request message (28), the repeat response message is a peer-delay request message (35).

6. Method of anyone of the preceding claims, wherein the corrupted message is a peer-delay response follow-up message (26) in a two-step synchronization process, the repeat response message (37) comprises the stored transmission time ($t_{83}$) of the peer delay response message (6).

7. Method of anyone of the preceding claims, wherein the corrupted message (20; 22; 24; 26; 28) is a peer-delay response follow-up message in a one-step synchronization process, the repeat response message comprises the difference between the stored time of receiving the peer-delay request messages and the time of sending the repeat response message.

8. A system for handling corrupted messages that are involved in a clock synchronization process in an Ethernet-based network, **characterized in that** the system comprises:

- a slave node (2) comprising means for detecting that a message (20; 22; 24; 26; 28) involved in the time synchronization process is corrupted;
- the slave node (2) comprising means for sending a repeat request message (21; 23; 25; 27; 29) to the sender (1; 2) of the corrupted message (20; 22; 24; 26; 28);
- a master node (1) comprising means for sending a repeat response message (33; 34; 35; 36; 37) upon reception of the repeat request message (21; 23; 25; 27; 29);
- the slave node (2) comprising means for utilizing at least one information associated with the received repeat response message (33; 34; 35; 36; 37) for the clock synchronization process.

9. The system of claim 8, **characterized in that** the system comprises means for executing a method according to anyone of claims 1 to 7.

10. A computer readable medium comprising computer executable instructions for performing the method of anyone of claims 1 to 7.

11. Slave node (2, 8) in an Ethernet-based network, **characterized in that** the slave node comprises means for

- detecting that a message (20; 22; 24; 26; 28) involved in the time synchronization process is corrupted;
- sending a repeat request message (21; 23; 25; 27; 29) to the sender (1; 2) of the corrupted message (20; 22; 24; 26; 28);
- receiving a repeat response message (33; 34; 35; 36; 37) from the sender (1; 2) of the corrupted message; and
- utilizing at least one information associated with the received repeat response message (33; 34; 35; 36; 37) for adjusting the internal clock.

12. Slave node (2; 8) of claim 11, **characterized in that** the slave node (2; 8) comprises means to send and/or receive specific repeat request messages (21; 23; 25; 27; 29) and/or specific repeat response messages (33; 34; 35; 36; 37) according to the specifications given in anyone of claims 1 to 7.

13. Master node in a network, **characterized in that** the master node comprises means for

- receiving a repeat request message (21; 23; 25; 27; 29) from the recipient (2; 8) of a corrupted synchronization message (20; 22; 24; 26; 28); and
- sending a repeat response message (33; 34; 35; 36; 37) to the sender of the repeat request message (21; 23; 25; 27; 29).

14. Master node of claim 13, **characterized in that** the master node (1) comprises means to send and/or receive specific repeat request messages (21; 23; 25; 27; 29) and/or specific repeat response messages (33; 34; 35; 36; 37) according to the specifications given in anyone of claims 1 to 7.

FIG. 1

FIG. 2

# FIG. 3

# FIG. 4

# FIG. 5

# FIG. 6

**FIG. 7**

**FIG. 8**

**FIG. 9**

Europäisches
Patentamt

European
Patent Office

Office européen
des brevets

# EUROPEAN SEARCH REPORT

Application Number

EP 15 19 3156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/077659 A1 (OKUDA MASATO [JP]) 28 March 2013 (2013-03-28) * paragraphs [0003] - [0005], [0054] - [0062], [0071] - [0072], [0086] - [0096] * | 1-14 | INV. H04J3/06 |
| X | EP 1 896 127 A1 (ST JUDE MEDICAL [SE]) 12 March 2008 (2008-03-12) * paragraph [0042] - paragraph [0050] * | 1-14 | |
| A | EP 2 173 052 A2 (INFINEON TECHNOLOGIES AG [DE]) 7 April 2010 (2010-04-07) * paragraph [0032] - paragraph [0043]; figure 3 * | 1-14 | |
| A | JP 2012 034224 A (HITACHI CABLE) 16 February 2012 (2012-02-16) * paragraphs [0035] - [0056] * | 1-14 | |

TECHNICAL FIELDS
SEARCHED      (IPC)

H04J
H04L
H04W

The present search report has been drawn up for all claims

| Place of search | Date of completion of the search | Examiner |
|---|---|---|
| Munich | 24 March 2016 | Itani, Maged |

EPO FORM 1503 03.82 (P04C01)

EP 3 166 240 A1

## ANNEX TO THE EUROPEAN SEARCH REPORT
## ON EUROPEAN PATENT APPLICATION NO.

EP 15 19 3156

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2016

| Patent document cited in search report | | | Publication date | Patent family member(s) | | | Publication date |
|---|---|---|---|---|---|---|---|
| US 2013077659 | A1 | | 28-03-2013 | JP | 2013074527 | A | 22-04-2013 |
| | | | | US | 2013077659 | A1 | 28-03-2013 |
| EP 1896127 | A1 | | 12-03-2008 | EP | 1896127 | A1 | 12-03-2008 |
| | | | | US | 2009088821 | A1 | 02-04-2009 |
| | | | | WO | 2006118499 | A1 | 09-11-2006 |
| EP 2173052 | A2 | | 07-04-2010 | CN | 101795182 | A | 04-08-2010 |
| | | | | EP | 2173052 | A2 | 07-04-2010 |
| | | | | US | 2010070817 | A1 | 18-03-2010 |
| JP 2012034224 | A | | 16-02-2012 | NONE | | | |

EPO FORM P0459

For more details about this annex : see Official Journal of the European Patent Office, No. 12/82

13